# EUROPÄISCHE PATENTANMELDUNG

(11) **EP 1 389 735 A1**
(43) Veröffentlichungstag der Anmeldung: **18.02.2004**
(21) Anmeldenummer: 02018486.7
(22) Anmeldetag: 16.08.2002
(51) Int. Cl.: G01S 3/02

(54) **System und Verfahren zum Bestimmen eines Winkels der relativen Ausrichtung eines Antennenfeldes einer Funkstation**

(71) Anmelder: SIEMENS AKTIENGESELLSCHAFT, 80333 München (DE)
(72) Erfinder: Papoutsis, Georgios, 10587 Berlin (DE); Wehmeier, Lars, 10115 Berlin (DE)

(57) **Zusammenfassung**

Das erfindungsgemäße Verfahren zum Bestimmen eines Winkels (α1) der relativen Ausrichtung (AA1) eines Antennenfeldes (A1) einer ersten Funkstation (BS1), das wenigstens zwei Antennen aufweist, bezüglich einer Referenzrichtung (N), sieht vor, dass ein Winkel (γ) zwischen der ersten Funkstation (BS1) und einer zweiten Funkstation (BS2), bezogen auf die Referenzrichtung (N), ermittelt wird. Von der zweiten Funkstation (BS2) werden Signale (S1) zur ersten Funkstation (BS1) übertragen. Die Signale (S1) werden vom Antennenfeld (A1) der ersten Funkstation (BS1) empfangen und ein Empfangswinkel (β) wird zwischen den empfangenen Signalen (S1) und der Ausrichtung (AA1) des Antennenfelds (A1) bestimmt. Der Winkel (α1) wird als Differenz zwischen dem Winkel (γ ) des Richtungsvektors (V) und dem Empfangswinkel (β) bestimmt.

## Beschreibung

Die Erfindung betrifft ein Verfahren zum Bestimmen eines Winkels der relativen Ausrichtung eines Antennenfeldes einer Funkstation sowie ein entsprechendes Funksystem und eine entsprechende Funkstation.

In Funksystemen wie beispielsweise denjenigen des Mobilfunks ist der Einsatz von gerichteten Antennen möglich. Im Gegensatz zu omnidirektionalen Antennen strahlen diese ihre Signale nicht in alle Himmelsrichtungen aus, sondern nur in einstellbaren Richtungen. Gerichtete Antennen können durch Antennenfelder realisiert werden. Ein Antennenfeld wird durch mindestens zwei, üblicherweise jedoch durch mehr als zwei, Antennen gebildet, die relativ zueinander so ausgerichtet sind, dass bei gleichzeitigem Übertragen der Signale über alle Antennen des Antennenfeldes die gewünschte Charakteristik gerichteten Antenne erzielt wird.

Bei zellularen Mobilfunksystemen kommen eine große Anzahl von Basisstationen zum Einsatz. Es existieren Systeme mit mehreren tausend Basisstationen. Die Basisstationen werden von zentralen Einheiten des Mobilfunknetzes, beispielsweise Basisstationcontrollern, gesteuert. Sind die Basisstationen mit gerichteten Antennen ausgerüstet, ist es für die zentralen Einheiten notwendig, davon Kenntnis zu haben, welche Ausrichtung die gerichteten Antennen bzw. die Antennenfelder jeder Basisstation haben. Nur wenn diese Kenntnis vorliegt, ist es für die zentralen Einheiten möglich, die Ressourcenbelegung durch die einzelnen Basisstationen zu steuern oder zu überwachen. Aus diesem Grund werden bei der Installation des Mobilfunksystems die gerichteten Antennen der Basisstationen in einer definierten Weise ausgerichtet, die den zentralen Einheiten bekannt ist. Durch äußere Einflüsse wie beispielsweise Stürme kommt es häufig dazu, dass die zunächst in korrekter Weise ausgerichteten Antennen in ihrer Ausrichtung verstellt werden. Dies bleibt dem Mobilfunknetz solange unbekannt, bis eine Person die betreffende Basisstation aufsucht und die Ausrichtung des Antennenfeldes überprüft. Bei dieser Überprüfung wird herkömmlicher Weise ein Kompass eingesetzt.

Der Erfindung liegt die Aufgabe zugrunde, die Bestimmung der Ausrichtung eines Antennenfeldes bzw. einer gerichteten Antenne zu vereinfachen.

Diese Aufgabe wird mit einem Verfahren gemäß Anspruch 1 sowie einem Funksystem gemäß Anspruch 9 sowie einer Funkstation gemäß Anspruch 10 gelöst. Vorteilhafte Aus- und Weiterbildungen der Erfindung sind Gegenstand der abhängigen Ansprüche.

Beim erfindungsgemäßen Verfahren zum Bestimmen eines Winkels der relativen Ausrichtung eines Antennenfeldes einer ersten Funkstation, das wenigstens zwei Antennen aufweist, bezüglich einer Referenzrichtung, wird ein Winkel eines Richtungsvektors zwischen der ersten Funkstation und einer zweiten Funkstation, bezogen auf die Referenzrichtung, ermittelt. Von der zweiten Funkstation werden Signale zur ersten Funkstation übertragen, die vom Antennenfeld der ersten Funkstation empfangen werden. Anschließend wird ein Empfangswinkel zwischen den empfangenen Signalen und der Ausrichtung des Antennenfeldes bestimmt. Dann wird der Winkel der Ausrichtung des Antennenfeldes bezüglich der Referenzrichtung als Differenz zwischen dem Winkel des Richtungsvektors und dem Empfangswinkel bestimmt.

Die Erfindung ermöglicht in vorteilhafter Weise eine automatische Bestimmung der Ausrichtung des Antennenfeldes, ohne das Wartungspersonal die erste Funkstation aufsuchen muss. Die beschriebenen Verfahrensschritte können nämlich unter Nutzung der Signale der zweiten Funkstation vollständig durch die erste Funkstation durchgeführt werden.

Nach einer Weiterbildung der Erfindung ist es dann möglich, dass der Winkel der Ausrichtung des Antennefeldes nach seiner Ermittlung in der ersten Funkstation an eine mit mehreren Funkstationen verbundene zentrale Einheit übermittelt wird. Führt jede der Funkstationen dann das erfindungsgemäße Verfahren durch, verfügt die zentrale Einheit anschließend über die Kenntnis der Ausrichtung der gerichteten Antennen aller dieser Funkstationen.

Der Richtungsvektor, der zur Ermittlung der relativen Ausrichtung verwendet wird, kann in einfacher Weise aus den geographischen Positionen der beiden Funkstationen ermittelt werden. Handelt es sich bei den Funkstationen um stationäre Stationen, können ihre Positionen bei ihrer Installation festgestellt und beispielsweise fest in der ersten Funkstation gespeichert werden. Nach einer Weiterbildung der Erfindung ist es jedoch auch möglich, die geographischen Positionen der Funkstationen mit Hilfe eines funkgestützten Positionierungssystems zu ermitteln. Dies ermöglicht auch zu einem späteren Zeitpunkt eine Aktualisierung der Kenntnis der Positionen der Funkstationen und ist insbesondere dann sinnvoll, wenn die Funkstationen mobil sind.

Nach einer vorteilhaften Variante der Erfindung führt die erste Funkstation nicht die vollständige Ermittlung der Ausrichtung des Antennenfeldes durch. Vielmehr wird nur der Empfangswinkel zwischen den empfangenen Signalen und der Ausrichtung des Antennenfeldes von der ersten Funkstation ermittelt und gegebenenfalls an eine mit mehreren Funkstationen verbundene zentrale Einheit übermittelt. Dagegen wird der Winkel des Richtungsvektors zwischen der ersten Funkstation und der zweiten Funkstation und/oder die Differenz zwischen dem Winkel des Richtungsvektors und dem Empfangswinkel durch die zentrale Einheit ermittelt. Wird nur der Winkel des Richtungsvektors durch die zentrale Einheit ermittelt, muss diese anschließend den ermittelten Wert an die erste Funkstation übertragen, so dass diese dann den Winkel der relativen Ausrichtung ihres Antennenfeldes berechnen kann. Es ist jedoch auch möglich, dass die erste Funkstation auch den Winkel des Richtungsvektors (beispielsweise aufgrund von Informationen über die Positionen der ersten und zweiten Funkstation, die sie von der zentralen Einheit erhalten hat) berechnet und diesen Wert gemeinsam mit dem Empfangswinkel zwischen den empfangenen Signalen und der Ausrichtung des Antennefeldes an die zentrale Einheit übermittelt, wo anschließend die Differenz zwischen dem Winkel des Richtungsvektors und dem Empfangsvektor ermittelt wird.

Nach einer vorteilhaften Weiterbildung der Erfindung wird zur zusätzlichen Bestimmung der relativen Position einer dritten Funkstation folgendermaßen verfahren:

Von der dritten Funkstation ausgesendete Signale werden von der ersten Funkstation empfangen und ein Empfangswinkel zwischen diesen empfangenen Signalen und der Ausrichtung des Antennenfeldes der ersten Funkstation wird bestimmt. Anschließend wird die relative Position der dritten Funkstation als Differenz zwischen dem Winkel der Ausrichtung des Antennenfeldes der ersten Funkstation bezüglich der Referenzrichtung und dem Empfangswinkel der Signale der dritten Funkstation bestimmt. Auf diese Weise kann vorteilhaft die relative Lage der dritten Funkstation im Verhältnis zur ersten Funkstation ermittelt werden.

Nach einer Ausführungsform der Erfindung sind die erste und die zweite Funkstation ortsfeste Stationen, beispielsweise Basisstationen in einem Mobilfunksystem, und die dritte Funkstation ist eine mobile Station.

Die Erfindung eignet sich zum Einsatz in beliebigen Funksystemen, insbesondere beliebigen Mobilfunksystemen, sofern nur gerichtete Antennen bzw. Antennenfelder zum Einsatz kommen.

Das erfindungsgemäße Funksystem und die erfindungsgemäße Funkstation weisen Mittel bzw. Einrichtungen auf, die zur Durchführung des erfindungsgemäßen Verfahrens dienen.

Die Erfindung wird im folgenden anhand von in den Figuren dargestellten Ausführungsbeispielen näher erläutert.

Es zeigen:
- Fig. 1: zwei benachbarte Funkzellen eines Mobilfunksystems,
- Fig. 2: Einzelheiten zur Bestimmung der Ausrichtung eines Antennenfeldes einer Funkstation aus Fig. 1 und
- Fig. 3: eine erfindungsgemäße Funkstation.

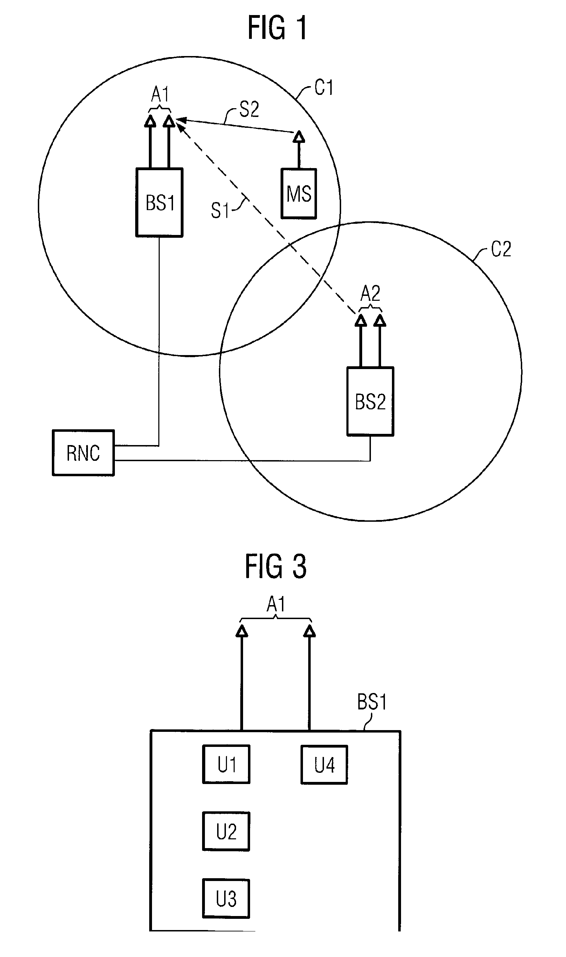

Fig. 1 zeigt einen Ausschnitt eines erfindungsgemäßen Funksystems in Form eines zellularen Mobilfunksystems. Bei dem Mobilfunksystem kann es sich beispielsweise um eines nach dem GSM- oder UMTS- Standard handeln. Dargestellt sind zwei Funkzellen C1, C2, denen jeweils eine Basisstation BS1, BS2 zugeordnet ist. Die Basisstationen weisen jeweils ein Antennenfeld A1, A2 auf. Im gezeigten Ausführungsbeispiel hat jedes Antennenfeld lediglich zwei Antennen. In der Praxis kann eine größere Anzahl von Antennen zum Einsatz kommen. Die Antennenfelder A1, A2 in Fig. 1 sind gerichtete Antennen, die sowohl zum Empfangen als auch zum Senden von Signalen dienen. Beide Basisstationen BS1, BS2 sind mit einer zentralen Einheit RNC des Mobilfunknetzes verbunden. Im betrachteten Beispiel handelt es sich um einen Basisstationscontroller. Die zweite Basisstation BS2 überträgt Signale S1 zur ersten Basisstation BS1. Weiterhin zeigt Fig. 1 beispielhaft eine Mobilstation MS, die Signale S2 zur ersten Basisstation BS1 überträgt. Im folgenden wird erläutert, wie ein Winkel der relativen Ausrichtung des Antennenfeldes A1 der ersten Funkstation BS1 bestimmt wird.

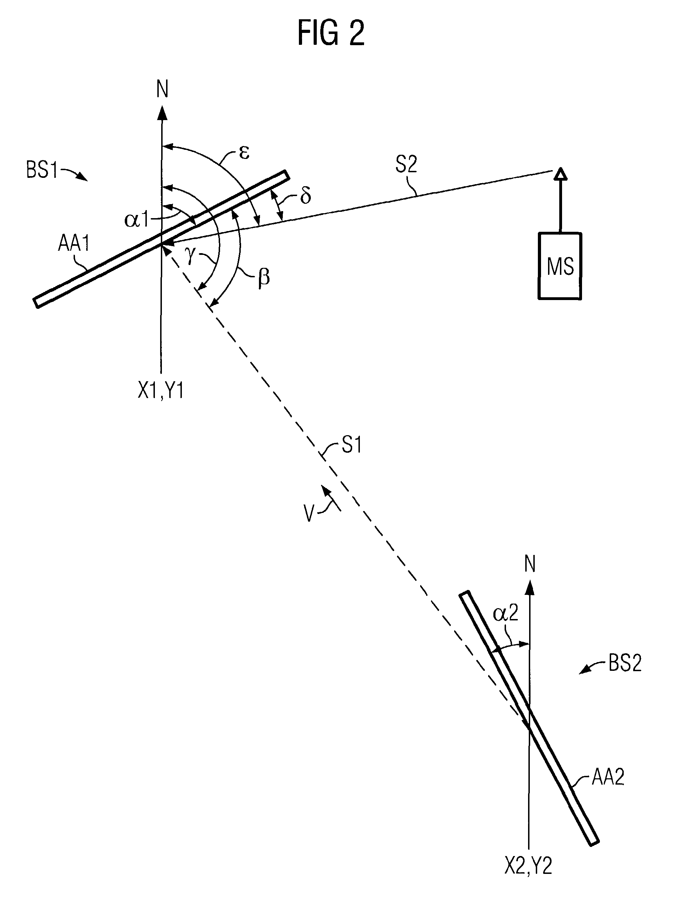

Fig. 2 zeigt die beiden Basisstationen BS1, BS2 sowie die Mobilstation MS in einer anderen Darstellung, in die für die Berechnung der Ausrichtung des Antennenfeldes A1 der ersten Basisstation BS1 benötigte Rechengrößen eingezeichnet sind. Es wird angenommen, dass der Winkel α1 der relativen Ausrichtung AA1 des Antennenfeldes A1 der ersten Funkstation BS1 bezüglich einer Referenzrichtung N ermittelt werden soll. Bei der Referenzrichtung N kann es sich beispielsweise um die Nordrichtung handeln. Sie kann beispielsweise mittels eines Kompasses festgestellt werden und kann als bekannt vorausgesetzt werden. Die Ausrichtung AA1 des Antennenfeldes A1 ergibt sich durch die relative Anordnung der Antennen des Antennenfeldes zueinander. Die Ausrichtung AA1 ist in Fig. 2 in vereinfachter Darstellung als Balken abgebildet. In einem ersten Schritt wird ein Winkel γ eines Richtungsvektors V zwischen der ersten Funkstation BS1 mit den Koordinaten X1, Y1 und der zweiten Funkstation BS2 mit den Koordinaten X2, Y2 ermittelt. Hierzu wird der Richtungsvektor V aus den Koordinaten X1, Y1 und X2, Y2 berechnet.

Die in Fig. 2 eingetragenen Koordinaten X1, Y1 bzw. X2, Y2 der beiden Basisstationen BS1, BS2 können beispielsweise mittels eines funkgestützten Positionierungssystems wie beispielsweise GPS ermittelt werden. Dies kann einmalig bei der Installation des Mobilfunksystems und der beiden Basisstationen BS1, BS2 erfolgen. Die auf diese Weise ermittelten Koordinaten können dann zentral im Mobilfunknetz gespeichert werden, so dass die zentrale Einheit RNC darauf Zugriff hat. Auf diese Weise ist sie in der Lage, die betreffenden Koordinaten für die Berechnung des Richtungsvektors V zu verwenden bzw. die Koordinaten an die erste Basisstation BS1 für eine solche Berechnung mitzuteilen. Alternativ können die Koordinaten X1, Y1; X2, Y2 aller Basisstationen BS1, BS2 auch in jeder Basisstation gespeichert sein. Dann ist jede Basisstation in der Lage, den Richtungsvektor zu bestimmen. Nach einer anderen Alternative können statt der Koordinaten auch die Richtungsvektoren zwischen allen Basisstationen in der zentralen Einheit RNC bzw. den Basisstationen BS1, BS2 gespeichert werden. Vorteilhafterweise werden in den Basisstationen BS1, BS2 jedoch nur die Koordinaten X1, Y1; X2, Y2 oder Richtungsvektoren V derjenigen Basisstationen gespeichert, die der jeweiligen Basisstation unmittelbar benachbart sind. Denn nur zwischen diesen kommt es zum Zwecke der Ermittlung der Ausrichtung ihres Antennenfeldes zur Übertragung der Signale S1 Auf diese Weise muss jede Basisstation nur relativ wenig Daten speichern.

Der Winkel γ zwischen dem Richtungsvektor V und der Referenzrichtung N kann in bekannter Weise über die Formel zur Berechnung des Skalarprodukts zweier Vektoren (a x b = |a| x |b| x cos α) berechnet werden. In einem weiteren Schritt werden die Signale S1, die die zweite Basisstation BS2 zur ersten Basisstation BS1 überträgt, von letzterer empfangen. Es wird ein Empfangswinkel β zwischen den empfangenen Signalen S1 und der Ausrichtung AA1 des Antennenfeldes A1 bestimmt. Die Bestimmung des Einfallswinkels eines Signals unter Verwendung einer gerichteten Empfangsantenne ist dem Fachmann bekannt. In einem letzten Schritt wird der Winkel α1 der Ausrichtung AA1 des Antennefeldes A1 bezüglich der Referenzrichtung N als Differenz zwischen dem Winkels γ des Richtungsvektors V und dem Empfangswinkel β bestimmt.

Die gesamte Ermittlung des Winkels α1 der relativen Ausrichtung AA1 kann durch die erste Basisstation BS1 durchgeführt werden. Hierzu weist die erste Funkstation BS1 gemäß Fig. 3 eine erste Einrichtung U1 zum Ermitteln des Winkels γ des Richtungsvektors V auf. Die erste Basisstation BS1 weist dann weiterhin eine zweite Einrichtung U2 zum Bestimmen des Empfangswinkels β zwischen den von der zweiten Funkstation BS2 ausgesendeten Signalen S1 und der Ausrichtung AA1 des Antennefeldes A1 auf. Ferner weist sie eine dritte Einrichtung U3 zum Bestimmen des Winkels α1 der Ausrichtung AA1 des Antennenfeldes A1 auf. Die erste Basisstation BS1 in Fig. 3 weist weiterhin eine vierte Einrichtung U4 auf, die dazu dient, die von der Basisstation BS1 ermittelten Werte an die zentrale Einheit RNC aus Fig. 1 zu übermitteln. Gemäß Fig. 2 weist auch das Antennenfeld A2 der zweiten Basisstation BS2 eine bestimmte Ausrichtung AA2 bezüglich der Referenzrichtung N auf, die einem Winkel α2 entspricht. Bei diesem Ausführungsbeispiel sind alle Basisstationen BS1, BS2 des in Fig. 1 dargestellten Mobilfunksystems wie in Fig. 3 gezeigt aufgebaut, so dass die zentrale Einheiten RNC die Winkel α1, α2 der relativen Ausrichtung der Antennenfelder aller mit ihr verbundenen Basisstationen BS1, BS2 erhält.

Bei anderen Ausführungsbeispielen der Erfindung ist es möglich, dass entweder die erste Einrichtung U1 oder die dritte Einrichtung U3 außerhalb der ersten Basisstation BS1 realisiert sind, beispielsweise in der in Fig. 1 dargestellten zentralen Einheit RNC. So ist es möglich, dass die Ermittlung des Winkels γ des Richtungsvektors V durch die zentrale Einheit RNC durchgeführt und entweder an die erste Basisstation BS1 übermittelt wird, die dann unter Verwendung des Winkels γ den Winkel α1 berechnet, oderfür die Berechnung des Winkels α1 in der zentralen Einheit RNC verwendet wird, wozu es notwendig ist, dass die erste Basisstation BS1 den Wert des Winkels β an die zentrale Einheit RNC überträgt. Im erstgenannten Fall muss zumindest eine der ersten Einrichtung U1 in Fig. 3 entsprechende Einheit in der zentralen Einheit RNC angeordnet sein. Im zweitgenannten Fall muss darüber hinaus auch eine der dritten Einrichtung U3 aus Fig. 3 entsprechende Einheit in der zentralen Einheit RNC angeordnet sein.

Die zentrale Einheit RNC aus Fig. 1 enthält selbstverständlich Einrichtungen zum Senden und zum Empfangen der genannten, mit der ersten Basisstation BS1 ausgetauschten Daten.

Anhand von Fig. 2 soll nun noch erläutert werden, auf welche Weise die erste Basisstation BS1 eine relative Position der Mobilstation MS bestimmt. Hierzu sendet die Mobilstation MS die Signale S2 an die erste Basisstation BS1, die diese empfängt. Nun bestimmt die erste Basisstation BS1 einen Empfangswinkel δ zwischen diesen empfangenen Signalen S2 und der Ausrichtung AA1 ihres Antennenfeldes Al. Anschließend wird die relative Position der Mobilstation MS als Differenz zwischen dem Winkel α1 der Ausrichtung AA1 des Antennenfeldes A1 der ersten Basisstation BS1 bezüglich der Referenzrichtung N und dem Empfangswinkel δ der Signale S2 der Mobilstation MS bestimmt, weil bei dem in Fig. 2 dargestellten Beispiel das Vorzeichen des Winkels α1 positiv und das Vorzeichen des Winkels δ negativ ist, ergibt die genannte Differenzbildung eine Addition der Beträge der Winkel α1 und δ.

Die Berechnung der relativen Position der Mobilstation MS durch die genannte Differenzbildung kann entweder durch die erste Basisstation BS1 oder durch die zentrale Einheit RNC erfolgen. Im erstgenannten Fall ist es Vorteilhaft, wenn die erste Funkstation die ermittelte relative Position der Mobilstation MS anschließend an das Mobilfunknetz, beispielsweise an die zentrale Einheit RNC, mitteilt. Im zweitgenannten Fall muss die erste Basisstation BS1 den von ihr ermittelten Empfangswinkel δ zuvor an die zentrale Einheit RNC übermitteln.

## Patentansprüche

1. Verfahren zum Bestimmen eines Winkels (α1) der relativen Ausrichtung (AA1) eines Antennenfeldes (A1) einer ersten Funkstation (BS1), das wenigstens zwei Antennen aufweist, bezüglich einer Referenzrichtung (N), bei dem
- ein Winkel (γ) eines Richtungsvektors (V) zwischen der ersten Funkstation (BS1) und einer zweiten Funkstation (BS2), bezogen auf die Referenzrichtung (N), ermittelt wird,
- von der zweiten Funkstation (BS2) Signale (S1 zur ersten Funkstation (BS1) übertragen werden,
- die Signale (S1) vom Antennenfeld (A1) der ersten Funkstation (BS1) empfangen werden,
- ein Empfangswinkel (β) zwischen den empfangenen Signalen (S1 und der Ausrichtung (AA1) des Antennenfelds (A1) bestimmt wird
- und der Winkel (α1) der Ausrichtung (AA1) des Antennenfeldes (A1) bezüglich der Referenzrichtung (N) als Differenz zwischen dem Winkel (γ) des Richtungsvektors (V) und dem Empfangswinkel (β) bestimmt wird.

2. Verfahren nach Anspruch 1, bei dem
der Richtungsvektor (V) aus den geographischen Positionen (x1, y1; x2, y2) der beiden Funkstationen (BS1, BS2) ermittelt wird.

3. Verfahren nach Anspruch 2, bei dem
die geographischen Positionen der Funkstationen mit Hilfe eines funkgestützten Positionierungssystems ermittelt werden.

4. Verfahren nach einem der vorstehenden Ansprüche, bei dem der Winkel (α1) der Ausrichtung (AA1) des Antennenfeldes (A1) in der ersten Funkstation (BS1) ermittelt und anschließend an eine mit mehreren Funkstationen (BS1, BS2) verbundene zentrale Einheit (RNC) übermittelt wird.

5. Verfahren nach einem der Ansprüche 1 bis 3, bei dem
- der Empfangswinkel (β) zwischen den empfangenen Signalen (S1 und der Ausrichtung (AA1) des Antennenfelds (A1) von der ersten Funkstation (BS1) ermittelt und an eine mit mehreren Funkstationen (BS1, BS2) verbundene zentrale Einheit (RNC) übermittelt wird,
- und der Winkel (γ) des Richtungsvektors (V) zwischen der ersten Funkstation (BS1) und der zweiten Funkstation (BS2) und/oder die Differenz zwischen dem Winkel (γ) des Richtungsvektors (V) und dem Empfangswinkel (β) durch die zentrale Einheit (RNC) ermittelt wird.

6. Verfahren nach einem der vorstehenden Ansprüche zum zusätzlichen Bestimmen der relativen Position einer dritten Funkstation (MS), bei dem
- von der dritten Funkstation (MS) ausgesendete Signale (S2) von der ersten Funkstation (BS1) empfangen werden,
- ein Empfangswinkel (δ) zwischen diesen empfangenen Signalen (S2) und der Ausrichtung (AA1) des Antennenfeldes (A1) der ersten Funkstation (BS1) bestimmt wird
- und die relative Position der dritten Funkstation (MS) als Differenz zwischen dem Winkel (α1) der Ausrichtung (AA1) des Antennenfeldes (A1) der ersten Funkstation bezüglich der Referenzrichtung (N) und dem Empfangswinkel (δ) der Signale (S2) der dritten Funkstation (MS) bestimmt wird.

7. Verfahren nach Anspruch 7, bei dem
die erste und die zweite Funkstation (BS1, BS2) ortsfeste Stationen und die dritte Funkstation (MS) eine mobile Station ist.

8. Verfahren nach einem der vorstehenden Ansprüche, bei dem die erste und zweite Funkstation (BS1, BS2) Basisstationen in einem Mobilfunksystem sind.

9. Funksystem mit wenigstens einer ersten und einer zweiten Funkstation (BS1, BS2)
- dessen erste Funkstation (BS1) ein Antennenfeld (Al) aufweist,
- mit einer Einrichtung (U1) zum Ermitteln eines Winkels (γ) eines Richtungsvektors (V) zwischen der ersten Funkstation (BS1) und der zweiten Funkstation (BS2), bezogen auf eine Referenzrichtung (N),
- mit einer Einrichtung (U2) zum Bestimmen eines Empfangswinkels (β) zwischen von der zweiten Funkstation (BS2) ausgesendeten und von der ersten Funkstation (BS1) empfangenen Signalen (S1) und der Ausrichtung (AA1) des Antennenfeldes (A1) der ersten Funkstation (BS1)
- und mit einer Einrichtung (U3) zum Bestimmen des Winkels (α1) der Ausrichtung (AA1) des Antennenfeldes (A1) der ersten Funkstation (BS1) bezüglich der Referenzrichtung (N) als Differenz zwischen dem Winkel (γ) des Richtungsvektors (V) und dem Empfangswinkel (β).

10. Funkstation (BS1)
- mit einem Antennenfeld (A1),
- mit einer Einrichtung (U2) zum Bestimmen eines Empfangswinkels (β) zwischen von der zweiten Funkstation (BS2) ausgesendeten und von der ersten Funkstation (BS1) empfangenen Signalen (S1 und der Ausrichtung (AA1) des Antennenfeldes (A1) der ersten Funkstation (BS1)
- und mit einer Einrichtung (U3) zum Bestimmen des Winkels (α1) der Ausrichtung (AA1) des Antennenfeldes (A1) der ersten Funkstation (BS1) bezüglich der Referenzrichtung (N) als Differenz zwischen dem Winkel (γ ) eines Richtungsvektors (V) zwischen der ersten Funkstation (BS1) und der zweiten Funkstation (BS2), bezogen auf eine Referenzrichtung (N), und dem Empfangswinkel (β).
